# DEMANDE DE BREVET EUROPEEN

(11) **EP 2 238 828 A1**
(43) Date de publication de la demande: **13.10.2010**
(21) Numéro de dépôt: 10158488.6
(22) Date de dépôt: 30.03.2010
(51) Int. Cl.: A01K 39/06

(54) **Embuc de nourrissage et machine distributrice le comportant**

(30) Priorité: 31.03.2009 FR 0901587
(71) Demandeur: Dussau Distribution Sas, 40320 Pecorade (FR); Dussau, Christian, 40320 Samadet (FR)
(72) Inventeur: Dussau, Christian, 40320, SAMADET (FR)
(74) Mandataire: Ravina, Bernard

(57) **Abrégé**

L'embuc (1) pour le nourrissage des palmipèdes comportant une canule (10) se caractérise essentiellement en ce qu'il est équipé de moyens aptes à la mesure d'un paramètre représentatif de la pression interne du jabot.

## Description

### Domaine technique

La présente invention est du domaine des matériels utilisés pour le nourrissage des palmipèdes et autres volatiles et concerne un embuc de nourrissage prévu pour être intubé dans l'oesophage et le jabot du palmipède pour y introduire une ration alimentaire délivrée par une machine distributrice d'aliments.

La présente invention concerne également une machine distributrice équipée d'un tel embuc.

### Etat de la technique antérieure.

On connaît de l'état de la technique, des embucs spécifiques à la distribution de rations alimentaires sous forme de pâtée et des embucs spécifiques à la distribution de rations alimentaires à base de grains de céréales entiers ou fractionnés comme des grains de maïs.

Les embucs destinés à la distribution d'une pâte alimentaire sont formées d'une canule longiforme, de section sensiblement constante, apte à être raccordée directement à une conduite de distribution d'une pâtée alimentaire.

Les embucs destinés à la distribution de rations à base de grains entiers ou fractionnés sont habituellement dotés chacun d'une vis sans fin montée en rotation dans leur canule et actionnée par un moteur électrique. La canule est habituellement dotée d'un entonnoir ou d'une chambre de réception de la nourriture à distribuer.

### Exposé de l'invention

### Problème technique.

Les techniques de nourrissage forcées connues à ce jour, comme les techniques de gavage, consistent à introduire dans le jabot de l'animal, par intubation de l'embuc, une ration dosée de nourriture. L'inconvénient de telles techniques réside dans le fait que la quantité de nourriture introduite dans le jabot peut se révéler supérieure à la capacité de ce dernier. Il peut en résulter des distensions des tissus oesophagiques, sources de blessures qui peuvent se révéler létales ou pour le moins sources de candidose. La capacité du jabot peut aussi se trouver réduite par le fait d'une mauvaise digestion de la ration précédemment administrée. Pour réduire les risques de blessures, le préposé au nourrissage, lors de l'opération de nourrissage, a pour habitude de palper le jabot afin d'en déterminer au touché sa capacité et son degré de remplissage et éviter dans la mesure du possible toute distension et par voie de conséquence les blessures pouvant en découler. Cette méthode en raison de son empirisme trouve bien vite ses limites et se révèle dépendante de l'expérience du préposé au nourrissage, de son degré d'attention et de son degré de fatigue qui peut émousser sa sensibilité tactile.

Par ailleurs, les nouvelles conditions d'élevage, fixées par les directives européennes imposent l'utilisation de logements collectifs rendant difficile ou mal aisée la palpation du jabot du palmipède. Cet inconvénient accentue le problème précédemment évoqué.

### Solution technique.

La présente invention vise à résoudre le problème sus évoqué par la mise en oeuvre d'un embuc de nourrissage principalement **caractérisé en ce qu**'il est équipé de moyens aptes à la mesure d'un paramètre représentatif de la pression interne du jabot.

Par la mesure en continu de cette pression, il devient maintenant possible de contrôler rigoureusement l'introduction de la ration de nourriture dans le jabot et d'interrompre cette distribution dans le cas où cette pression atteindrait une valeur de consigne au-delà de laquelle apparaît un risque de blessure du jabot. On comprend que par un contrôle à l'aide de moyens physiques on s'affranchit des aléas d'un contrôle au jugé mené par le préposé au nourrissage.

Selon une autre caractéristique de l'invention, le paramètre mesuré est une pression et le moyen utilisé est un capteur de pression porté par l'embuc de nourrissage.

Selon une autre caractéristique de l'invention, le paramètre mesuré est une différence de pression et l'embuc comporte deux capteurs de pression distants l'un de l'autre.

Selon une autre caractéristique de l'invention, le paramètre mesuré est un déplacement et le capteur utilisé est un capteur de déplacement.

Selon une autre caractéristique de l'invention, le paramètre mesuré est une puissance électrique consommée et le capteur utilisé mesure l'intensité du courant d'alimentation de l'organe moteur d'actionnement de la vis sans fin que comporte la canule de l'embuc.

La présente invention est relative également à une machine de distributrice de nourriture en rations dosées pour le nourrissage des palmipèdes, comportant une réserve de nourriture à distribuer en rations, une pompe distributrice de la nourriture, rations par rations, apte à puiser une ration de nourriture dans la réserve et la délivrer à une conduite d'amenée de la nourriture terminée par un embuc, ladite machine comportant de plus une unité de contrôle et de commande contrôlant et commandant les divers équipements qu'elle comporte, se caractérisée essentiellement en ce qu'elle comporte un embuc selon l'une quelconque des revendications précédentes dont le moyen apte à la mesure d'un paramètre représentatif de la pression interne du jabot est connecté à ladite unité de contrôle et de commande afin que cette dernière compare en continu la valeur de la pression interne du jabot à une valeur de consigne et interdise ou interrompe la distribution de la ration alimentaire lorsque la valeur de pression mesurée atteint la valeur de consigne.

D'autres avantages, buts et caractéristiques de l'invention apparaîtront à la lecture de la description d'une forme préférée de réalisation, donnée à titre d'exemple non limitatif en se référant aux dessins annexés en lesquels :
- la figure 1 est une vue schématique d'un embuc selon une première forme de réalisation,
- la figure 2 est une vue schématique d'un embuc selon une deuxième forme de réalisation,
- la figure 3 est une vue schématique d'un embuc selon une troisième forme de réalisation,
- la figure 4 est une vue schématique d'un embuc selon une quatrième forme de réalisation,
- la figure 5 est une vue schématique d'un embuc selon une cinquième forme de réalisation,
- les figures 6 et 7 montrent un embuc de nourrissage comportant une partie terminale souple formant une pointe au repos (figure 6) et apte à s'ouvrir sous l'effet du passage du flux de nourriture (figure 7),
- la figure 8 est une vue schématique d'une machine distributrice équipée d'un embuc conforme à l'invention.

### Meilleure manière de réaliser l'invention

Tel que représenté, l'embuc 1 selon l'invention est formé principalement d'une canule 10 longiforme rectiligne en matériau rigide ou souple présentant des propriétés de biocompatibilité. L'embuc est de plus équipé d'une poignée de préhension 11 à laquelle est fixée la canule 10. Cet embuc 1, en considérant le sens d'écoulement de la ration alimentaire dans sa canule présente une extrémité amont d'introduction de la ration alimentaire et une extrémité aval de délivrance de cette ration.

Conformément à l'invention, l'embuc 1 est doté d'un moyen apte à la mesure d'un paramètre représentatif de la pression interne du jabot.

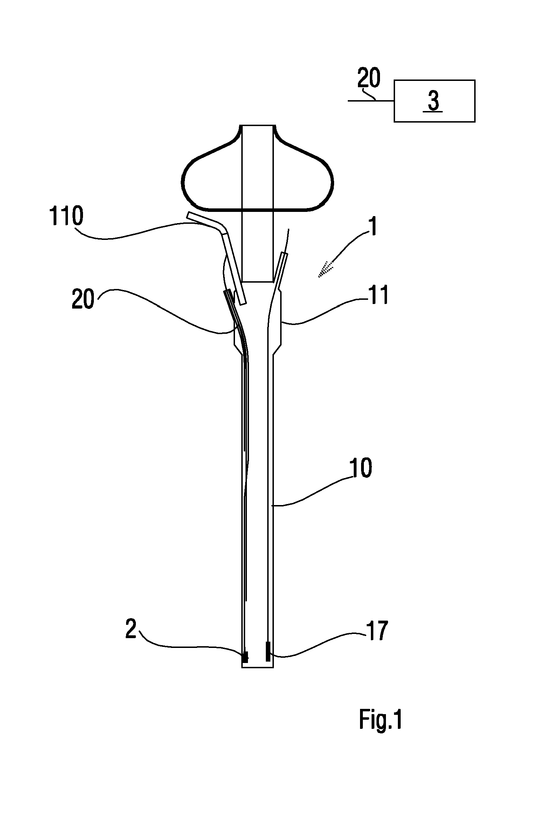

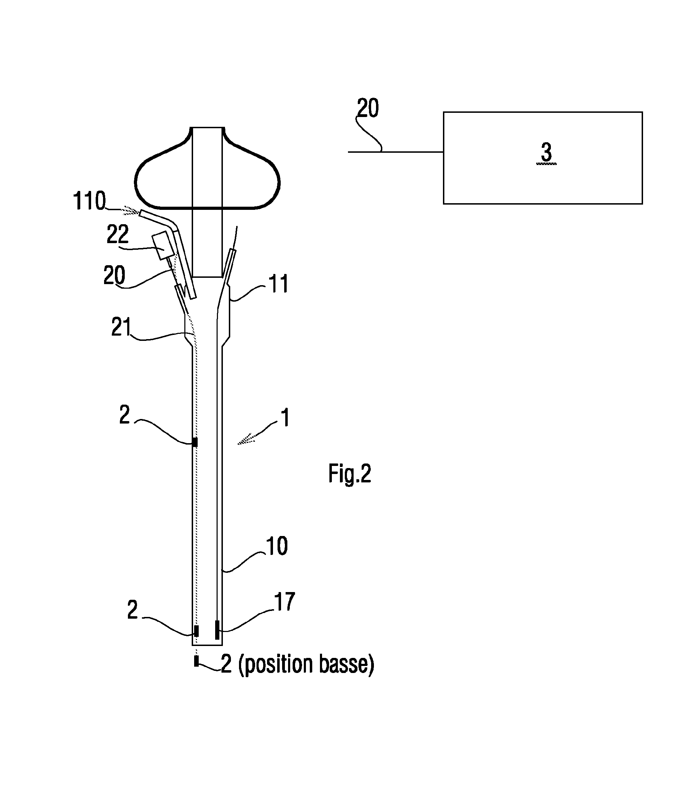

Selon une première forme de réalisation, telle montrée en figures 1 et 2, ce moyen est constitué par un capteur de pression 2 installé fixement dans la canule à proximité de l'extrémité aval. Ce capteur 2 est fixé à cette dernière par tous moyens connus, par exemple par collage.

L'information de pression délivrée par le capteur 2 est transmise via une liaison 20 appropriée à une unité de contrôle et de commande 3 installée à distance de l'embuc ou porté par ce dernier. Afin de protéger cette liaison de transmission d'information de pression, la canule 10 de l'embuc pourra comporter un canal dédié, apte à la recevoir.

Le capteur de pression 2 pourra être de tout type connu, ainsi pourra être utilisé un capteur électrique de pression ou bien un capteur pneumatique. Dans le cas d'un capteur électrique, la liaison 20 de transmission d'information de pression, sera constituée par une ligne électrique, tandis que dans le cas d'un capteur pneumatique, cette liaison sera constituée, au moins en partie, par une conduite contenant un fluide apte à transmettre l'information de pression à un élément récepteur non représenté, la transmission de cette information de pression sera opérée par modification de la pression du fluide. L'élément récepteur sera connecté à l'unité de commande et de contrôle 3 par tout moyen connu.

Le capteur 2 peut ne pas être installé fixement dans la canule mais comme le montre la figure 2, porté par une tige d'actionnement 21 mue par un organe moteur 22 solidaire de l'embuc et plus particulièrement de la poignée 11. Le moteur 22 et la tige d'actionnement 21 seront aptes, à la commande, à disposer le capteur 2 soit dans une position de mesure selon laquelle il est externe à la canule, soit dans une position de repos selon laquelle il est interne à cette dernière.

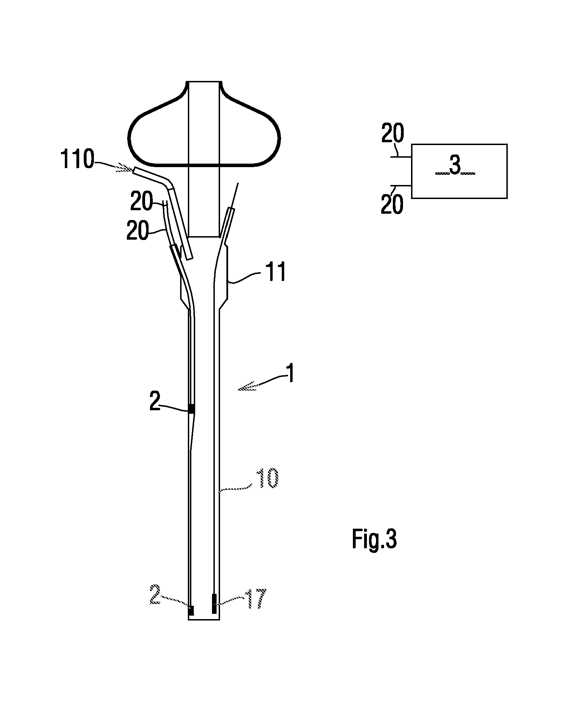

Selon une troisième forme de réalisation, telle que montrée en figure 3, le moyen apte à la mesure d'un paramètre représentatif de la pression est apte à mesurer une différence de pression. Dans ce cas de figure, ce moyen est constitué par deux capteurs de pressions 2 distants l'un de l'autre installés fixement dans la canule. Ces capteurs peuvent être du type électronique ou bien du type pneumatique. La liaison de transmission 20 sera également installée dans un canal dédié formé dans la canule 10 de l'embuc.

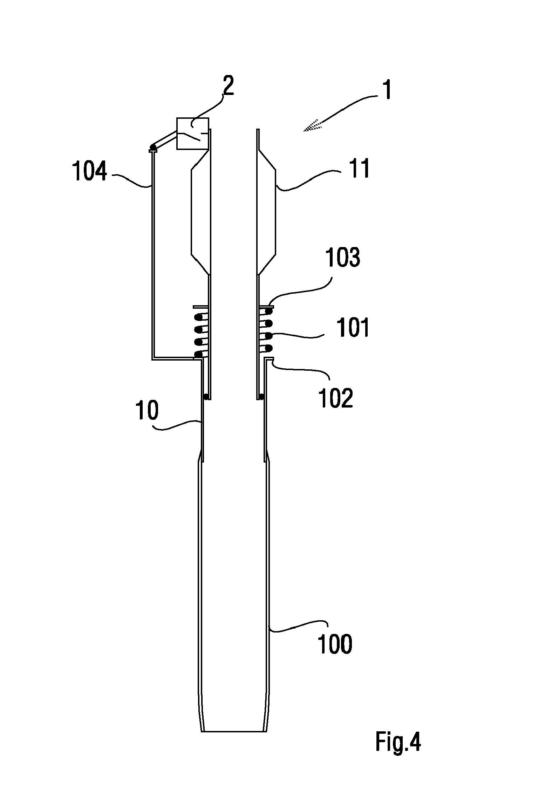

Selon une quatrième forme de réalisation telle que représentée en figure 4, le paramètre mesuré est un déplacement et l'embuc est équipé d'un capteur de mesure 2 du déplacement d'un élément 100 coulissant prévu pour pénétrer dans le jabot du palmipède. Cet élément 100 est apte à se déplacer selon l'axe longitudinal de la canule de l'embuc sous l'effet de l'action de la pression de la nourriture dans le jabot, le déplacement pourra s'effectuer à l'encontre de l'action exercée par un organe élastique 101 de rappel. Le capteur de déplacement, par exemple du type potentiométrique est fixé à la poignée et comporte une liaison 20 de transmission des données constituées par des fils électriques.

Selon la forme préférée de réalisation, la canule 10 est formée d'une part d'un corps de canule, solidaire de la poignée 11, et d'autre part de l'élément 100, ce dernier constituant la partie inférieure de la canule. Comme on peut le voir en figure 4, cet élément 100 est tubulaire et est monté en coulissement sur le corps de canule. Il est équipé en partie supérieure d'un épaulement 102 d'appui de l'organe élastique 101. Cet organe élastique 101 étant en appui par ailleurs contre un épaulement 103 formé sur le corps de canule. L'élément coulissant 100 actionne le capteur 2 par l'intermédiaire d'une tige rigide 104 ou autre moyen.

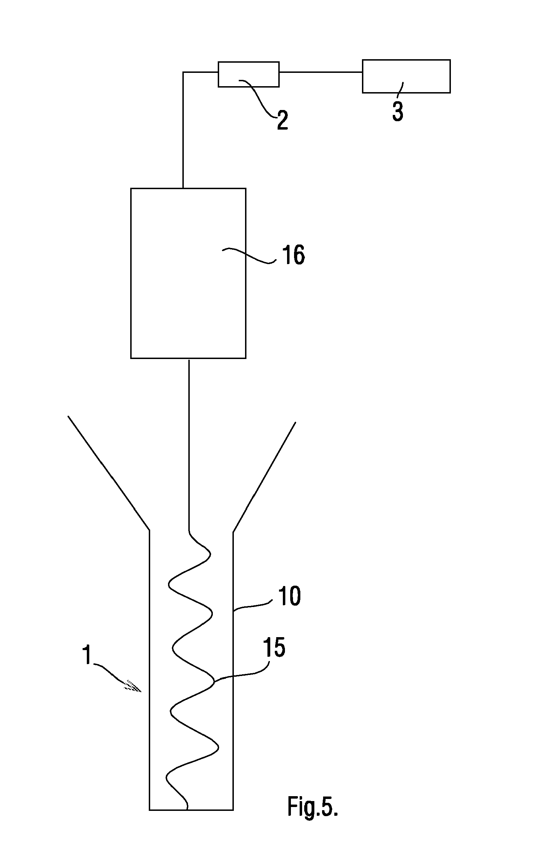

En figure 5 est représenté un embuc de nourrissage aux grains entiers. Cet embuc comporte une canule 10 dont la partie aval est agencé en entonnoir. Dans cette canule est montée en rotation une vis sans fin 15 actionnée par un organe moteur électrique 16 solidaire de l'embuc. Pour ce type d'embuc, le paramètre mesuré est la puissance électrique absorbée par le moteur d'entraînement 16 de la vis sans fin 15 et le capteur utilisé mesure l'intensité du courant d'alimentation du moteur électrique.

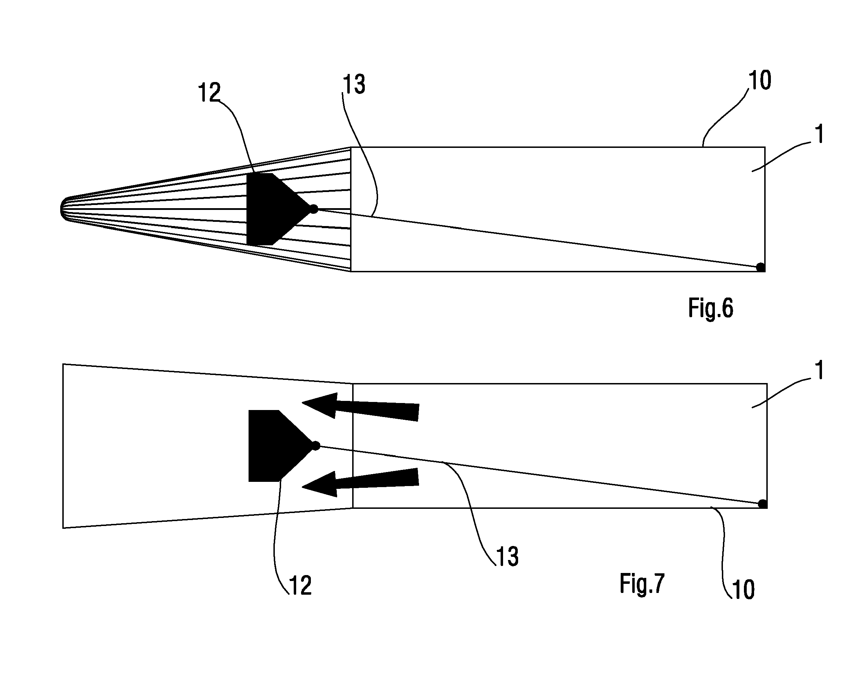

Comme le montrent les figures 6 et 7, la canule pour ce qui concerne au moins sa partie destinée à être intubé dans l'oesophage du palmipède, sera avantageusement souple et élastiquement déformable. Cette disposition écarte les risques de blessures du tube digestif de l'animal. Par ailleurs, la canule à son extrémité inférieure terminale pourra être conformée en pointe pour faciliter son introduction dans l'oesophage de l'animal. En outre, au moins cette partie terminale sera radialement déformable, de manière élastique afin de voir sa section augmentée sous l'effet du passage de la nourriture. Préférentiellement, sous l'effet de l'action du passage de la nourriture, cette partie terminale sera apte à s'ouvrir en corole et adopter ainsi une forme évasée. Cette partie terminale pourra être équipée d'un déflecteur conique 12, occupant une position axiale dans la canule 10 et apte à repousser le produit vers les faces internes de ladite partie terminale afin d'en forcer son ouverture en corole. Ce déflecteur conique 12 sera solidaire d'un lien souple 13 fixé à la canule.

L'embuc tel que décrit peut de plus être équipé d'une camera endoscopique 17 en lumière blanche ou en infrarouge, afin, par analyse d'image pouvoir détecter les signes pathologiques de candidose et autres infections affectant le jabot de l'animal.

L'embuc peut aussi comporter un détecteur de PH apte à détecter le degré d'acidité du jabot de l'animal.

L'embuc peut également comporter un capteur de température. Ce capteur peut venir au contact du palmipède par exemple de son bec pour en mesurer la température. Alternativement, ce capteur peut être du type de ceux aptes à mesurer l'intensité d'un rayonnement infrarouge, la mesure étant alors opérée sans contact.

Enfin la canule 10 de l'embuc peut comporter une tubulure additionnelle 110 d'introduction de produits additionnels, ces produits pouvant être de l'eau, des solutions médicamenteuses, des compléments alimentaires et autres.

De même la partie souple et élastique de l'embuc peut intégrer un capteur de pression, ce dernier sera noyé dans la matière composant ladite partie.

On a précédemment décrit des capteurs associés à des liaisons filaires de transmission des données, mais en variante, ces liaisons seront du type hertzien. L'embuc pourra alors être équipé d'une antenne.

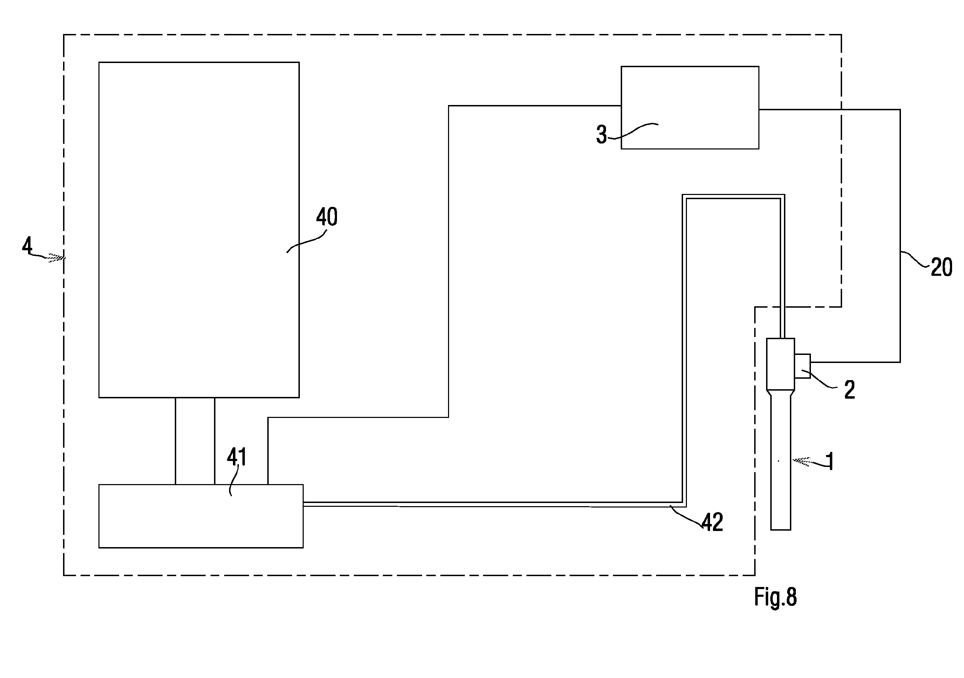

La présente invention est également relative à une machine distributrice 4 de rations alimentaires à des palmipèdes, équipée d'un embuc conforme à l'invention. Cette machine, comme représentée schématiquement en figure 8 comporte une réserve 40 de nourriture à distribuer en rations, une pompe 41 distributrice de la nourriture, apte à puiser une ration de nourriture dans la réserve 40 et la délivrer à une conduite 42 d'amenée de la nourriture terminée par un embuc 1 selon l'invention, ladite machine comportant de plus une unité de contrôle et de commande 3 contrôlant et commandant les divers équipements qu'elle comporte, cette unité de contrôle et de commande 3 étant constituée par l'unité précitée 3.

Le ou chaque capteur 2 équipant l'embuc est connecté via la liaison de transmission de données 20 dont il est équipé à l'unité de contrôle et de commande 3 de la machine 4. Ainsi cette unité surveillera en temps réel la pression du jabot au cours de la distribution de la ration et comparera à chaque instant cette valeur à une valeur de consigne à ne pas dépasser. Elle sera apte à interdire ou interrompre la distribution de la ration si la pression dans le jabot devient trop importante.

Il va de soi que la présente invention peut recevoir toutes modifications et variantes du domaine des équivalents techniques sans pour autant sortir du cadre du présent brevet.

## Revendications

1. Embuc (1) pour le nourrissage des palmipèdes comportant une canule (10) **caractérisé en ce qu'**il est équipé de moyens aptes à la mesure d'un paramètre représentatif de la pression interne du jabot.

2. Embuc selon la revendication 1, **caractérisé en ce que** le paramètre mesuré est une pression et le moyen utilisé est un capteur (2) de pression porté par l'embuc de nourrissage.

3. Embuc selon la revendication précédente, **caractérisé en ce que** le capteur de pression (2) est installé fixement dans la canule (10) à proximité de l'extrémité aval de cette dernière.

4. Embuc selon la revendication 2, **caractérisé en ce que** le capteur de pression (2) est porté par une tige d'actionnement (21) mue par un organe moteur (22), ledit moteur (22) et la tige d'actionnement (21) étant aptes, à la commande à placer le capteur (2) soit dans une position de mesure selon laquelle il est externe à la canule (10), soit dans une position de repos selon laquelle il est interne à cette dernière.

5. Embuc selon la revendication 1, **caractérisé en ce que** le paramètre mesuré est une différence de pression et l'embuc comporte deux capteurs de pression (2) distants l'un de l'autre et montés fixement dans la canule.

6. Embuc selon la revendication 1, **caractérisé en ce que** le paramètre mesuré est le déplacement d'un élément (100) coulissant prévu pour pénétrer dans le jabot du palmipède et apte à se déplacer selon l'axe longitudinal de l'embuc et que le capteur (2) utilisé est un capteur de déplacement apte à mesurer le déplacement de cet élément.

7. Embuc selon la revendication précédente, **caractérisé en ce que** la canule (10) est formée d'une part d'un corps de canule et d'autre part de l'élément (100), ce dernier constituant la partie inférieure de la canule (10) ledit élément étant tubulaire et étant monté en coulissement sur le corps de canule, ce dit élément (100) étant de plus équipé en partie supérieure d'un épaulement (102) d'appui d'un organe élastique (101) de rappel, ledit organe élastique (101) étant en appui par ailleurs contre un épaulement 103 formé sur le corps de canule.

8. Embuc selon la revendication 1 dont la canule (10) reçoit une vis sans fin (15) entraînée en rotation par un organe moteur 16), **caractérisé en ce que** le paramètre mesuré est la consommation de puissance électrique dudit organe moteur et le capteur utilisé mesure l'intensité du courant d'alimentation de l'organe moteur (16).

9. Embuc selon l'une quelconque des revendications précédentes, **caractérisé en ce qu'**il comporte une caméra endoscopique (17).

10. Embuc selon l'une quelconque des revendications précédentes, **caractérisé en ce qu'**il comporte un détecteur de PH.

11. Embuc selon l'une quelconque des revendications précédentes, **caractérisé en ce qu'**il comporte un capteur de température.

12. Embuc selon l'une quelconque des revendications précédentes, **caractérisée en ce que** la canule (10) comporte une tubulure additionnelle (101) d'introduction de produit.

13. Embuc selon l'une quelconque des revendications précédentes, **caractérisé en ce que** la canule (10) pour ce qui concerne au moins sa partie destinée à être intubé dans l'oesophage du palmipède est souple et élastiquement déformable.

14. Embuc selon la revendication précédente, **caractérisé en ce que** la canule à son extrémité inférieure terminale est conformé en pointe pour faciliter son introduction dans l'oesophage de l'animal et que cette partie terminale est radialement déformable de manière élastique de façon à s'ouvrir en corole sous l'effet de l'action du passage de la nourriture, ladite partie étant dotée d'un déflecteur conique (12) pour faciliter cette ouverture.

15. Machine (4) distributrice d'aliments en rations dosées pour le nourrissage des palmipèdes, comportant une réserve (40) de nourriture à distribuer en rations, une pompe (41) distributrice de la nourriture, rations par rations, apte à puiser une ration de nourriture dans la réserve (40) et la délivrer à une conduite d'amenée de la nourriture terminée par un embuc, ladite machine comportant de plus une unité de contrôle et de commande (3) contrôlant et commandant les divers équipements qu'elle comporte, **caractérisée en ce qu'**elle comporte un embuc (1) selon l'une quelconque des revendications précédentes dont le moyen apte à la mesure d'un paramètre représentatif de la pression interne du jabot est connecté à ladite unité de contrôle et de commande (3) afin que cette dernière compare en continu la valeur de la pression interne du jabot à une valeur de consigne et interdise ou interrompe la distribution de la ration alimentaire lorsque la valeur de pression mesurée atteint la valeur de consigne.
